(19)

**Europäisches Patentamt**
**European Patent Office**
**Office européen des brevets**

(11)  **EP 4 737 711 A1**

(12)  **EUROPEAN PATENT APPLICATION**
published in accordance with Art. 153(4) EPC

(43) Date of publication:
**06.05.2026  Bulletin 2026/19**

(21) Application number: **23943365.9**

(22) Date of filing: **01.12.2023**

(51) International Patent Classification (IPC):
**F03D 13/20** (2016.01)      **F03D 13/25** (2016.01)
**E02D 27/42** (2006.01)

(52) Cooperative Patent Classification (CPC):
Y02E 10/72; Y02E 10/727

(86) International application number:
**PCT/CN2023/135895**

(87) International publication number:
**WO 2025/000889 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **30.06.2023   CN 202310818717**

(71) Applicants:
• **GOLDWIND SCIENCE & TECHNOLOGY CO., LTD.**
  **Xinjiang 830026 (CN)**
• **Zhejiang Goldwind Science & Technology Co., Ltd.**
  **Wenzhou, Zhejiang 325026 (CN)**

(72) Inventors:
• **ZHAI, Endi**
  **Beijing 100176 (CN)**
• **GAO, Yang**
  **Beijing 100176 (CN)**
• **ZHANG, Zhihong**
  **Beijing 100176 (CN)**
• **ZHANG, Guoming**
  **Beijing 100176 (CN)**

(74) Representative: **Hoffmann Eitle**
  **Patent- und Rechtsanwälte PartmbB**
  **Arabellastraße 30**
  **81925 München (DE)**

(54)  **WIND TURBINE FOUNDATION, WIND GENERATING SET, AND CONTROL METHOD**

(57)      The present application relates to a wind turbine foundation, a wind turbine, and a control method. The wind turbine foundation includes: a floating body, comprising a main column, a plurality of auxiliary columns, and connecting bodies, the main column being used for connecting to a tower, the bottom wall of each auxiliary column being provided with a stabilization device, the stabilization device comprising a drive assembly, a first impeller, and a base connected to the auxiliary column, the base having an inner cavity, and a first opening and a second opening communicating with the inner cavity, the first opening and the second opening having a height difference in a first direction, the first opening, the inner cavity, and the second opening forming a flow channel for seawater, the first impeller being disposed in the inner cavity, the drive assembly driving the first impeller to rotate and causing the seawater to flow within the flow channel, so as to adjust a tilt angle between the floating body as a whole and a reference plane. The present application has a simple structure and relatively low cost.

Fig. 8

## Description

### CROSS-REFERENCE TO RELATED APPLICATIONS

The present application claims priority to Chinese Patent Application No. 202310818717.6 filed on June 30, 2023, which is hereby incorporated by reference in its entirety.

### TECHNICAL FIELD

The present application relates to the technical field of wind power, and in particular, to a wind turbine foundation, a wind turbine, and a control method.

### BACKGROUND

The wind power industry continues to contribute to the achievement of dual carbon goals. Currently, wind turbines are developing towards larger single-unit capacity, lighter overall weight, intelligence, and oceanization. Statistics show that the cumulative installed capacity of offshore wind power is increasing year by year. With the large-scale development of nearshore resources, the development and utilization of deep-sea resources are attracting much attention. In this business scenario, floating wind turbines are gradually developing and will become a major force in subsequent offshore wind power.

The wind turbine foundation is used to support components such as a tower and a nacelle of a floating wind turbine. Under a condition that the wind turbine faces loads such as wind, waves, ocean currents, and ice, from the perspective of overall dynamics, due to the "floating" characteristic of the floating wind turbine, the wind turbine foundation has full six degrees of freedom. Under the interwoven and coupled effects of the randomness of external loads and the complexity of the wind turbine's own motion, the nonlinear characteristics of the entire floating wind turbine become more complex. The motion stability of the floating wind turbine is one of the most important indicators for ensuring the continuous, stable, safe, and efficient power output and power generation of the wind turbine. Therefore, how to ensure the stability of the floating wind turbine is one of the problems urgently needing solution in the wind power field.

In related art, the wind turbine foundation mainly adjust the overall tilt angle of the wind turbine foundation by controlling the mutual flow of fluid between different floating columns, thereby ensuring the stability of the floating wind turbine where the wind turbine foundation is located. However, this design approach makes the overall structure of the wind turbine foundation complex and costly.

### SUMMARY

Embodiments of the present application provide a wind turbine foundation, a wind turbine, and a control method. The wind turbine foundation has a simple structure and relatively low cost.

In one aspect, an embodiment of the present application provides a wind turbine foundation disposed in seawater and used to support a tower, wherein the wind turbine foundation comprises: a floating body comprising a main column, a plurality of auxiliary columns, and connecting bodies, the plurality of auxiliary columns being spaced apart around a circumference of the main column and connected to the main column respectively via the connecting bodies, the main column being used for connecting to the tower, each of the auxiliary columns having a bottom wall capable of being arranged facing the seawater along a first direction; stabilization devices, the bottom wall of each of the auxiliary columns being provided with a respective one of the stabilization devices, the stabilization device comprising a drive assembly, a first impeller, and a base connected to the auxiliary column, the base having an inner cavity, and a first opening and a second opening communicating with the inner cavity, the first opening and the second opening having a height difference in the first direction, the first opening, the inner cavity, and the second opening forming a flow channel for the seawater, the first impeller being disposed in the inner cavity, the drive assembly driving the first impeller to rotate and causing the seawater to flow within the flow channel, so as to adjust a tilt angle between the floating body as a whole and a reference plane.

In another aspect, an embodiment of the present application provides a wind turbine including: the aforementioned wind turbine foundation; and a wind turbine main body disposed on the main column, the wind turbine main body comprising a tower connected to the main column, a nacelle disposed on the tower, and a wind rotor disposed on the nacelle.

In yet another aspect, an embodiment of the present application provides a control method for the aforementioned wind turbine, including: acquiring current power information of the wind turbine; under a condition that the current power information continuously exceeds a first threshold for a preset period of time, acquiring tilt angle information of the wind turbine foundation; under a condition that the tilt angle information exceeds a preset range, determining a stabilization device connected to a target auxiliary column that needs to be adjusted based on the tilt angle information, a direction of incoming wind, and target attitude information corresponding to a target attitude to which the wind turbine foundation is to be adjusted to; controlling a first impeller in the stabilization device connected to the target auxiliary column to rotate, so as to adjust the wind turbine foundation to the target attitude.

According to the wind turbine foundation, the wind turbine, and the control method provided by the embodiments of the present application, the wind turbine foundation includes the floating body and stabilization devices. The main column of the floating body can be used to connect and support the tower. The plurality of auxiliary columns are spaced apart around the circumference of the main column and are connected to the main column respectively via the connecting bodies, ensuring the stability of the main column's support for the tower. Since the bottom wall of the auxiliary column in the first direction is provided with the stabilization device, and the stabilization device includes a drive assembly, a first impeller, and a base connected to the auxiliary column, the base has an inner cavity and a first opening and a second opening communicating with the inner cavity, the first opening, the inner cavity, and the second opening form a flow channel for the seawater, and the first impeller is disposed in the inner cavity, by driving the first impeller to rotate via the drive assembly and causing the seawater to flow within the flow channel, the corresponding auxiliary column can be adjusted to float upward or sink downward under the action of the flowing seawater, thereby enabling attitude adjustment of the entire wind turbine foundation and ensuring the power generation efficiency of the wind turbine. Moreover, by arranging the stabilization device in the above structural form to achieve attitude adjustment, each auxiliary column can be adjusted independently without the need for connecting pipes, valve groups, etc., between them, resulting in a simple structure and low cost. At the same time, it can be achieved simply by controlling the rotation of the first impeller, thereby providing a fast response speed.

## BRIEF DESCRIPTION OF THE DRAWINGS

Features, advantages, and technical effects of exemplary embodiments of the present application will be described below with reference to the accompanying drawings.

Fig. 1 is a schematic structural diagram of a wind turbine according to an embodiment of the present application;
Fig. 2 is a schematic diagram of degrees of freedom of motion of a wind turbine foundation according to an embodiment of the present application;
Fig. 3 is a schematic structural diagram of a wind turbine foundation according to an embodiment of the present application;
Fig. 4 is a schematic structural diagram of an auxiliary column according to an embodiment of the present application;
Fig. 5 is a schematic structural diagram of an auxiliary column according to another embodiment of the present application;
Fig. 6 is a flowchart of a control method according to an embodiment of the present application;
Fig. 7 is a control logic diagram of a control method according to an embodiment of the present application;
Figs. 8 to 11 are schematic diagrams of different incoming wind directions according to an embodiment of the present application.

100 - wind turbine main body; 10 - tower; 20 - nacelle; 30 - generator; 40 - wind rotor; 41 - hub; 42 - blade; 50 - mooring system; 60 - seabed;
200 - wind turbine foundation;
210 - auxiliary column; 210a - first auxiliary column; 210b - second auxiliary column; 210c - third auxiliary column;
211 - bottom wall; 212 - hollow cavity;
220 - main column;
230 - connecting body;
300 - stabilization device;
310 - base; 311 - end wall; 312 - side wall; 310a - inner cavity; 310b - first opening; 310c - second opening;
320 - drive assembly; 321 - drive motor; 322 - gearbox; 323 - drive shaft; 324 - rotor; 325 - stator;
330 - first impeller; 331 - first hub; 332 - first blade;
340 - flow straightening member; 341 - second hub; 342 - second blade;
W - first direction.

In the drawings, the same components are denoted by the same reference numerals. The drawings are not drawn to actual scale.

## DETAILED DESCRIPTION

Features and exemplary embodiments of various aspects of the present application will be described in detail below. In the following detailed description, numerous specific details are set forth to provide a thorough understanding of the present application. However, it will be apparent to those skilled in the art that the present application may be practiced without some of these specific details. The description of the embodiments is merely intended to provide a better understanding of the present application by illustrating examples thereof. In the drawings and the following description, at least some of the well-known structures and techniques are not shown to avoid unnecessary obscuring of the present application; and, for clarity, the dimensions of some structures may be exaggerated. Furthermore, the features, structures, or characteristics described below may be combined in any suitable manner in one or more embodiments.

The directional terms appearing in the following description refer to the directions shown in the drawings, and are not intended to limit the specific structure of the wind turbine foundation, the wind turbine, and the control method of the present application. In the description of the present application, it should be noted that, unless otherwise explicitly specified and defined, the terms "mounted", "connected" should be understood broadly, for example, they may be fixed connections, detachable connections, or integral connections; and they may be direct connections or indirect connections. Those of ordinary skill in the art can understand the specific meanings of the above terms in the present application based on the specific circumstances.

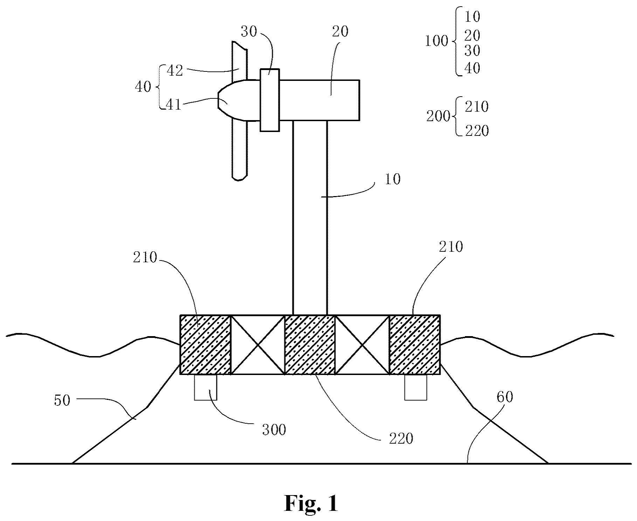

As shown in Fig. 1, an embodiment of the present application provides a wind turbine, including a wind turbine foundation 200 and a wind turbine main body 100. The wind turbine main body 100 includes a tower 10, a nacelle 20, a generator 30, and a wind rotor 40. The tower 10 is connected to the wind turbine foundation 200, the nacelle 20 is disposed at the top end of the tower 10, and the generator 30 is disposed in the nacelle 20. In some examples, the generator 30 may be located outside the nacelle 20. Of course, in some examples, the generator 30 may also be located inside the nacelle 20. The wind rotor 40 includes a hub 41 and a plurality of blades 42 connected to the hub 41. The wind rotor 40 is connected to the rotor of the generator 30 via the hub 41, thereby driving the rotor to rotate relative to the stator to meet the power generation requirements of the wind turbine. The wind turbine foundation 200 floats in the seawater, and in order to limit the motion range thereof, the wind turbine foundation 200 is fixed to the seabed 60 via a mooring system 50, achieving constrained motion within a certain range.

Since the floating wind turbine is significantly different from the onshore wind turbine and the offshore monopile fixed wind turbine, in terms of the overall system composition, the floating wind turbine has its unique float body and mooring system.

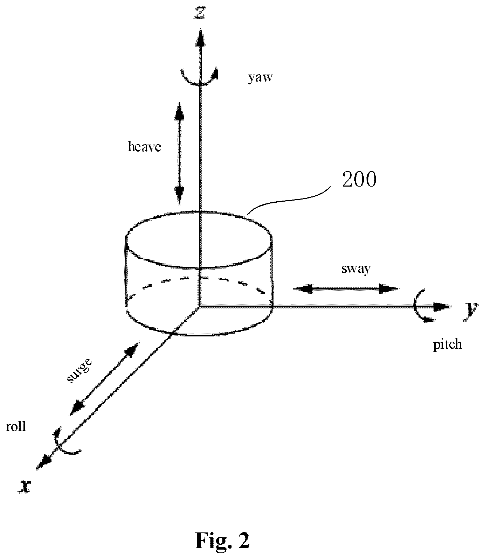

As shown in Fig. 2, in terms of external loads, the entire wind turbine foundation 200 faces loads such as wind, waves, ocean currents, and ice. In terms of overall dynamics, due to the "floating" characteristic of the floating wind turbine, the wind turbine foundation and the wind turbine in which the wind turbine foundation is located have full six degrees of freedom. The three translational degrees of freedom include: surge, sway, and heave. The three rotational degrees of freedom include: roll, pitch, and yaw. Under the combined action of random external load inputs and multi-system coupling of the wind turbine, the motion characteristics and mechanisms of the floating wind turbine become more complex.

Continuing to refer to Fig. 2, the motion stability of the floating wind turbine is one of the most important indicators for ensuring the continuous, stable, safe, and efficient power output and power generation of the wind turbine. However, while the wind rotor captures wind energy to generate rotational mechanical energy, it simultaneously generates thrust in the same direction as the incoming wind. This force is transmitted to the wind turbine foundation 200, causing the wind turbine to produce an elevation angle in the y rotational direction in Fig. 2, resulting in an angle between the wind rotor of the wind turbine and the incoming wind direction. According to formula (1), the power generation P is proportional to A, and the existence of the elevation angle will reduce A, leading to a decrease in the power generation of the wind turbine.

$$P = \frac{1}{2}\rho AV^3$$

(1)

In order to improve the stability of the floating wind turbine, the related art proposes a ballast control system for a floating wind turbine platform (i.e., a wind turbine foundation). This system consists of multiple internal volume stabilizing columns for accommodating ballast (water), and a control system, etc. Based on the incoming wind and the attitude of the wind turbine, the ballast water among the multiple stabilizing columns is coordinated and controlled, thereby making the wind rotor of the wind turbine face the wind and reducing power generation loss. It can control the attitude of the floating wind turbine, thereby optimizing the overall power generation.

However, during implementation and application, although this structural form of the wind turbine foundation can improve the stability of the floating wind turbine to a certain extent, it relies on the incoming wind speed and the attitude of the wind turbine to achieve the mutual linkage and adjustment of ballast water among the multiple internal volume stabilizing columns for accommodating ballast (water), requiring supporting hardware such as huge pump sets (thousands of cubic meters per hour), pipelines, valves, etc. On the one hand, this makes the structure complex; on the other hand, the requirements for system reliability and redundancy design are very high. Once any component in this system fails, it will affect the performance and safety of the entire unit, and the cost is high.

At the same time, from another dimension, achieving ballast water adjustment among different stabilizing columns through pump sets and pipelines is particularly slow, generally between half an hour and one hour. The response speed of the system determines that the wind turbine cannot match the incoming wind and wave loads in the optimal attitude in most scenarios.

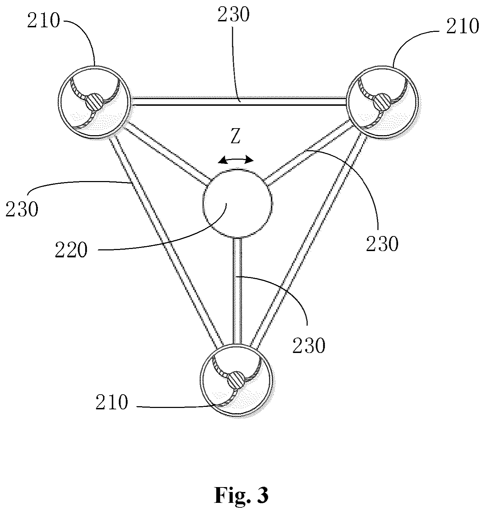

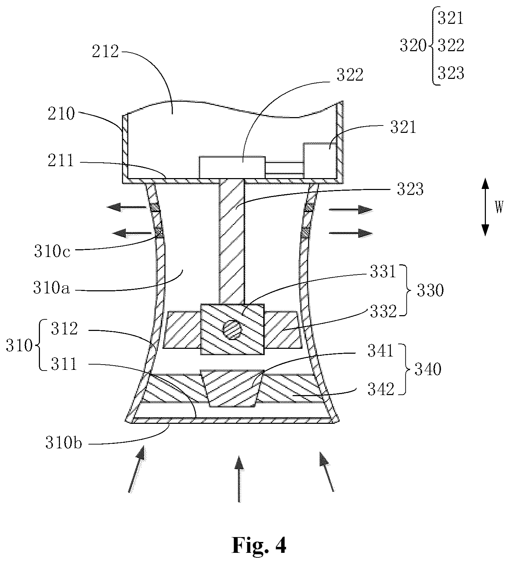

As shown in Fig. 3 and Fig. 4, based on this, an embodiment of the present application provides a new wind turbine foundation 200 disposed in seawater and used to support a tower 10. The wind turbine foundation includes a floating body and stabilization devices 300. The floating body includes a main column 220, a plurality of auxiliary columns 210, and connecting bodies 230. The plurality of auxiliary columns 210 are spaced apart around a circumference Z of the main column 220 and are connected to the main column 220 respectively via the connecting bodies 230. The main column 220 is used for connecting to the tower 10. Each of the auxiliary columns 210 has a bottom wall 211 capable of being arranged facing the seawater along a first direction W. The bottom wall 211 of each of the auxiliary columns 210 is provided with a respective one of the stabilization devices 300. The stabilization device 300 includes a drive assembly 320, a first impeller 330, and a base 310 connected to the auxiliary column 210. The base 310 has an inner cavity 310a, and a first opening 310b and a second opening 310c communicating with the inner cavity 310a. The first opening 310b and the second opening 310c have a height difference in the first direction W. The first opening 310b, the inner cavity 310a, and the second opening 310c form a flow channel for the seawater. The first impeller 330 is disposed in the inner cavity 310a. The drive assembly 320 drives the first impeller 330 to rotate and causes the seawater to flow within the flow channel, so as to adjust a tilt angle between the floating body as a whole and a reference plane.

The number of the main column 220 is one, and the number of the auxiliary columns 210 is plural. The plurality of auxiliary columns 210 are spaced apart around the circumference Z of the main column 220. The number of the auxiliary columns 210 can be three, four, five, or even more. The connecting lines between centers of the auxiliary columns 210 as a whole can form a polygon such as a triangle, quadrilateral, or pentagon, optionally a regular polygon. The center of the main column 220 can be located within the shape formed by the connecting lines between centers of the auxiliary columns 210, optionally at the center position of the shape formed by the connecting lines between centers of the auxiliary columns 210.

Each auxiliary column 210 as a whole can be cylindrical. In the direction perpendicular to the sea surface, or in the extension direction of the tower 10, the shape of the orthographic projection of the auxiliary column 210 can be a regular geometric shape.

Optionally, the shape of the orthographic projection of each auxiliary column 210 in the direction perpendicular to the sea surface can be circular, elliptical, or polygonal. Under a condition that the shape is polygonal, it is optionally a regular polygon. The shape and structure of the main column 220 can be the same as or different from the shape and structure of the auxiliary columns 210.

The sea surface can be understood as the surface of the seawater when it is calm and unaffected by wind and waves.

The connecting body 230 can be in the form of a connecting rod, a connecting plate, etc. Each auxiliary column 210 and the main column 220 are connected by a connecting body 230. The connection between the connecting body 230 and the main column 220 and the auxiliary column 210 can be achieved by fasteners or can be an integral structure. The extension lengths of the connecting bodies 230 can be equal.

The auxiliary column 210 can be a cylindrical structure. The first direction W can be the axial direction of the auxiliary column 210, which can also be understood as the direction perpendicular to the sea surface or the extension direction of the tower.

The bottom wall 211 of each auxiliary column 210 in the first direction W and the stabilization device 300 can be connected by a fixed connection, such as an integral structure, or by a detachable connection with fasteners such as bolts.

The base 310 can be a closed cylindrical structure body, or of course, a cylindrical structure body with an opening, with the opening closed by the bottom wall 211 of the auxiliary column 210 connected to the base 310.

The first impeller 330 is disposed in the inner cavity 310a of the base 310 and can have rotational freedom relative to the base 310 without interfering with the side wall 312 of the base 310. The drive assembly 320 can be disposed in the inner cavity 310a and connected to the base 310. Of course, the drive assembly 320 can also be partially disposed in the auxiliary column 210, which can ensure the driving of the first impeller.

The first opening 310b and the second opening 310c can be arranged opposite to each other in the first direction W, or can be staggered, ensuring that they have a height difference, and that the seawater can drive the auxiliary column 210 to float upward or sink downward in the first direction W when flowing.

According to the wind turbine foundation 200 provided by the embodiment of the present application, the main column 220 of the floating body can be used to connect and support the tower 10. The plurality of auxiliary columns 210 are spaced apart around the circumference Z of the main column 220 and are connected to the main column 220 respectively via the connecting bodies 230, ensuring the stability of the main column 220's support for the tower 10. Since the bottom wall 211 of the auxiliary column 210 in the first direction W is provided with the stabilization device 300, and the stabilization device 300 includes a drive assembly 320, a first impeller 330, and a base 310 connected to the auxiliary column 210, the base 310 has an inner cavity 310a and a first opening 310b and a second opening 310c communicating with the inner cavity 310a, the first opening 310b, the inner cavity 310a, and the second opening 310c form a flow channel for the seawater, and the first impeller 330 is disposed in the inner cavity 310a, by driving the first impeller 330 to rotate via the drive assembly 320 and causing the seawater to flow within the flow channel, the corresponding auxiliary column 210 can be adjusted to float upward or sink downward under the action of the flowing seawater, thereby enabling attitude adjustment of the entire wind turbine foundation 200 and ensuring the power generation efficiency of the wind turbine. Moreover, by arranging the stabilization devices 300 in the above structural form to achieve attitude adjustment, each auxiliary column 210 can be adjusted independently without the need for connecting pipes, valve groups, etc., between them, resulting in a simple structure and low cost.

At the same time, when external factors such as incoming wind cause the floating foundation to produce a tilt angle, the wind turbine foundation 200 provided by the embodiment of the present application only requires controlling the first impeller 330 of the stabilization device 300 at the corresponding position to rotate to achieve attitude adjustment, with instantaneous response, and the following situation can be avoided: waiting for half an hour to an hour, and the response speed of the system determines that the wind turbine cannot match the incoming wind and wave loads in the optimal attitude in most scenarios. Therefore, the power generation efficiency of the wind turbine where the wind turbine foundation 200 is located can be guaranteed.

In some optional embodiments, according to the wind turbine foundation 200 provided by the embodiment of the present application, the base 310 as a whole is cylindrical. The base 310 has an end wall 311 opposite the bottom wall 211 in the first direction W and a side wall 312 surrounding the end wall 311. The end wall 311 and the side wall 312 enclose to form the inner cavity 310a. The bottom wall 211 closes the inner cavity 310a. The first opening 310b is disposed on the end wall 311. The second opening 310c is disposed on the bottom wall 211.

The end wall 311 and the bottom wall 211 are spaced apart in the first direction W, and the planes where the end wall 311 and the bottom wall 211 are located can intersect, and can optionally parallel to each other.

The side wall 312 is hollow. One end of the side wall 312 in the first direction W is closed by the end wall 311, and the other end of the side wall 312is closed by the bottom wall 211 of the auxiliary column 210 connected to the side wall 312.

The number of the first openings 310b can be one, or of course, two or more. Under a condition that there are two or more first openings 310b, the two or more first openings 310b are spaced apart. Correspondingly, the number of the second openings 310c can be one, or of course, two or more. Under a condition that there are two or more second openings 310c, the two or more second openings 310c can be spaced apart around the periphery of the side wall 312.

According to the wind turbine foundation 200 provided by the embodiment of the present application, the base 310 adopting the above form has a simple structure and can enclose a relatively independent space for the first impeller 330, so that during the rotation of the first impeller 330, it can guide the seawater, guiding the seawater to flow between the first opening 310b and the second opening 310c, ensuring the floating or sinking requirements of the auxiliary column 210 connected to the base 310, and thereby reliably ensuring the attitude adjustment requirements of the wind turbine foundation 200 and the tower it supports.

In some optional embodiments, according to the wind turbine foundation 200 provided by the embodiment of the present application, along the first direction W, a radial dimension of the side wall 312 first decreases and then increases.

That is, the side wall 312 can be waist-drum-shaped or dumbbell-shaped.

According to the wind turbine foundation 200 provided by the embodiment of the present application, through the above setting, it is beneficial for the seawater to be guided upward or downward along the first direction W, ensuring the attitude adjustment requirements for the auxiliary column 210.

In some optional embodiments, according to the wind turbine foundation provided by the embodiment of the present application, the drive assembly 320 can include a motor and a drive shaft 323. The motor is connected to at least one of the base 310 and the auxiliary column 210, and the motor can be directly or indirectly connected to the drive shaft 323. The first impeller 330 is connected to the drive shaft 323. The motor can be a direct drive motor or a doubly-fed motor, etc.

The drive assembly 320 adopting the above form can ensure the driving requirements for the first impeller 330, and has a simple and compact structure, facilitating installation.

In some optional embodiments, according to the wind turbine foundation 200 provided by the embodiment of the present application, the drive assembly 320 includes a drive motor 321, a gearbox 322, and a drive shaft 323, the drive shaft 323 extends along the first direction W, an input end of the gearbox 322 is connected to the drive motor 321 and an output end of the gearbox 322 is connected to the drive shaft 323, and the first impeller 330 is connected to the drive shaft 323.

The gearbox 322 can adopt multi-stage speed change. The gearbox 322 is connected between the drive motor 321 and the drive shaft 323, so that the kinetic energy of the drive motor 321 can be transmitted to the drive shaft 323 through the gearbox 322. Through the gearbox 322, the output speed of the drive motor 321 can be increased or decreased before being transmitted to the drive shaft 323, ensuring the driving requirements for the drive shaft 323.

The axis of the drive shaft 323 and the axis of the drive motor 321 can intersect, or of course, be parallel. Under a condition that the axis of the drive shaft 323 and the axis of the drive motor 321 intersect, directional change can be achieved specifically through the gearbox 322, or an additional directional change structure can be set to ensure the transmission of kinetic energy.

According to the wind turbine foundation 200 provided by the embodiment of the present application, the drive assembly 320 adopting the above form can ensure the driving requirements for the first impeller 330. Moreover, it can allow the first impeller 330 to obtain a higher speed, improving the response rate of the floating support foundation 200 during attitude adjustment.

According to the wind turbine foundation 200 provided by the embodiment of the present application, the drive assembly 320 can be entirely located within the inner cavity 310a of the base 310, and the drive motor 321 and the gearbox 322 can be supported through a structure such as a set mounting frame. Of course, this is an optional embodiment.

In some optional embodiments, according to the wind turbine foundation 200 provided by the embodiment of the present application, the auxiliary column has a hollow cavity 212. The drive motor 321 and the gearbox 322 are located within the hollow cavity 212. The drive shaft 323 is inserted through the bottom wall 211 and connected to the output end of the gearbox 322. The drive shaft 323 is in dynamic sealing cooperation with the bottom wall 211.

The drive motor 321 and the gearbox can both be supported by the bottom wall 211.

Dynamic sealing can be understood as: a sealing between relatively moving parts in a machine (or an equipment), that is, the two components can move relative to each other while ensuring sealing between them.

According to the wind turbine foundation 200 provided by the embodiment of the present application, by providing the auxiliary column 210 with the hollow cavity 212, installation space can be provided for the drive motor 321 and the gearbox 322, reducing the occupied space of the base 310 and reducing the volume of the base 310. Moreover, the drive motor 321 and the gearbox 322 can provide a certain weight for the auxiliary column 210, giving it a certain ballast effect and ensuring the stability of the auxiliary column 210.

By having the drive shaft 323 in dynamic sealing cooperation with the bottom wall 211, it can not only ensure the rotational requirements of the drive shaft 323, meeting the driving of the first impeller 330, but also the dynamic sealing cooperation can ensure the sealing performance of the hollow cavity 212 of the auxiliary column 210, preventing seawater from entering and causing corrosion of the auxiliary column 210, flooding of the generator and gearbox, and even affecting the weight of the auxiliary column 210, etc.

Optionally, the dynamic sealing cooperation can be achieved by using bearings with sealing functions, or through methods such as labyrinth seals, etc., which will not be elaborated further here.

In some optional embodiments, according to the wind turbine foundation 200 provided by the embodiment of the present application, the first impeller 330 includes a first hub 331, a plurality of first blades 332, and a pitch system (not shown). The first hub 331 is connected to the drive assembly 320. The plurality of first blades 332 are spaced apart around the circumference Z of the first hub 331 and are connected to the first hub 331 through the pitch system, so as to adjust a pitch angle of the first blades 332.

The structural form of the pitch system can adopt the pitch form of the wind rotor 40 of the wind turbine. By changing the pitch angle between the first blade 332 and the first hub 331, the angle of attack of the fluid on the first blade 332 is changed.

According to the wind turbine foundation 200 provided by the embodiment of the present application, by the first impeller 330 including the first blades 332 and the first hub 331, and at the same time the first blades 332 and the first hub 331 being rotatably connected through the pitch system, the pitch angle of the first blades 332 are adjustable, thereby changing the interaction force with the seawater to control the torque and power captured by the first impeller 330.

Optionally, the pitch system can include a pitch bearing and a power source. The pitch bearing can include an inner ring and an outer ring that rotate in cooperation. One of the inner ring and the outer ring is connected to the first hub 331 and the other is connected to the first blade 332. The power source can cooperate with the pitch bearing and drive the inner ring and the outer ring of the pitch bearing to rotate relative to each other, thereby achieving pitch change. The power source includes but is not limited to the form of an electric motor plus a transmission wheel, which is consistent with the pitch principle of the hub and blades of a wind turbine.

In some optional embodiments, according to the wind turbine foundation 200 provided by the embodiment of the present application, the stabilization device 300 further includes a flow straightening member 340 disposed in the inner cavity 310a and connected to the base 310. The flow straightening member 340 is disposed between the first opening 310b and the first impeller 330, so as to straighten a flow direction of the seawater entering from the first opening 310b.

The flow straightening member 340 can be connected to the base 310. The flow straightening member 340 can be a plate with flow straightening holes, or can be in the form of an impeller.

According to the wind turbine foundation 200 provided by the embodiment of the present application, by further including the flow straightening member 340 in the stabilization device 300, the flow straightening member 340 can be used to adjust the flow direction of the entering seawater, avoiding energy loss caused by the seawater entering from multiple directions and contacting the first impeller 330.

In some optional embodiments, the flow straightening member 340 includes a second hub 341 and a plurality of second blades 342, the plurality of second blades 342 are spaced apart around a circumference of the second hub 341 and are connected to the second hub 341, an end of the second blade 342 away from the second hub 341 is connected to the base 310, and a flow straightening hole is formed between adjacent two of the second blades 342.

The number of the second blades 342 included in the flow straightening member 340 can be two, three, or more, as long as it can ensure the straightening of the entering seawater and reduce energy loss.

According to the wind turbine foundation 200 provided by the embodiment of the present application, the flow straightening member 340 adopting the above form can not only meet the straightening requirements for the incoming and outgoing seawater but also has a simple structural form and good straightening effect.

It should be understood that the wind turbine foundation 200 provided by the various embodiments of the present application described above are all described by taking the drive assembly 320 including components such as the drive motor 321, the gearbox 322, and the drive shaft 323 as examples. These are some optional embodiments and are not limited to the above situations.

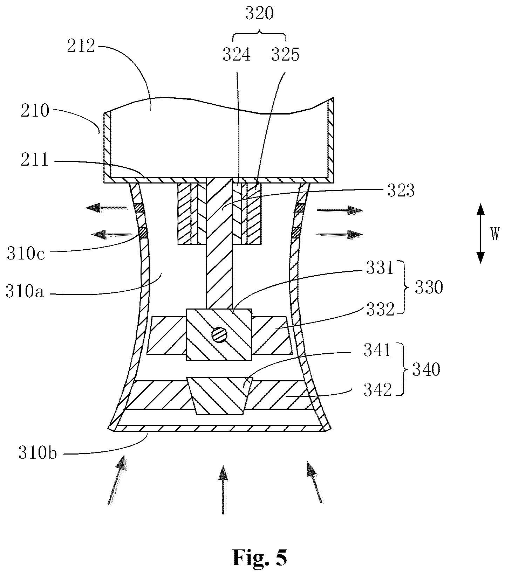

As shown in Fig. 5, in some embodiments, the drive assembly 320 can also include a direct drive motor. The direct drive motor is connected to the bottom wall 211 and includes a rotor 324 and a stator 325 that rotate in cooperation. The drive shaft 323 is coaxially disposed with the direct drive motor and connected to the rotor 324.

The direct drive motor can be directly connected to the base 310, or of course, can be connected to the bottom wall 211 of the auxiliary column 210. Of course, in order to ensure connection strength, the direct drive motor can also be connected to both the base 310 and the bottom wall 211.

Optionally, the direct drive motor can be located in the inner cavity 310a of the base 310. Of course, under a condition that the auxiliary column 210 has a hollow cavity 212, the direct drive motor can also be located in the hollow cavity 212. Optionally, it is located in the inner cavity 310a of the base 310.

According to the wind turbine foundation 200 provided by the embodiment of the present application, the drive assembly 320 adopting the above form can also meet the driving requirements for the first impeller 330, thereby ensuring the attitude adjustment requirements of the wind turbine foundation 200.

In some optional embodiments, according to the wind turbine foundation 200 provided by the embodiment of the present application, connecting lines between centers of the plurality of auxiliary columns 210 form a regular polygon. A center of the main column 220 coincides with a center of the regular polygon. In the circumferential direction Z of the main column 220, adjacent two of the auxiliary columns 210 are connected by the connecting body 230.

The regular polygon formed by the connecting lines between centers of the plurality of floating bodies can be a regular triangle, a regular quadrilateral, a regular pentagon, or other regular polygons. Each auxiliary column 210 can be provided with the stabilization device 300.

According to the wind turbine foundation 200 provided by the embodiment of the present application, through the above settings, high overall strength and good stability of the structure formed by the main column 220 and the auxiliary columns 210 connected through the connecting bodies 230 can be guaranteed. At the same time, the center of the main column 220 coincides with the center of the regular polygon, making the load-bearing capacity around the periphery of the main column 220 uniform. During attitude adjustment, the response speed is fast, and the process is highly stable.

According to the wind turbine provided by the embodiment of the present application, since the wind turbine foundation 200 provided in the above various embodiments is included, the tower 10 can be connected to the main column 220 and supported by the main column 220. The plurality of auxiliary columns 210 are spaced apart around the circumference Z of the main column 220 and are connected to the main column 220 respectively via the connecting bodies 230, ensuring the stability of the main column 220's support for the tower and improving the safety performance of the wind turbine. Since the bottom wall 211 of the auxiliary column 210 in the first direction W is provided with the stabilization device 300, and the stabilization device 300 includes a drive assembly 320, a first impeller 330, and a base 310 connected to the auxiliary column 210, the base 310 has an inner cavity 310a and a first opening 310b and a second opening 310c communicating with the inner cavity 310a, the first opening 310b, the inner cavity 310a, and the second opening 310c form a flow channel for the seawater, and the first impeller 330 is disposed in the inner cavity 310a, by driving the first impeller 330 to rotate via the drive assembly 320 and causing the seawater to flow within the flow channel, the corresponding auxiliary column 210 can be adjusted to float upward or sink downward under the action of the flowing seawater, thereby enabling attitude adjustment of the entire wind turbine foundation 200 and ensuring the power generation efficiency of the wind turbine. Moreover, by arranging the stabilization devices 300 in the above structural form to achieve attitude adjustment, each auxiliary column 210 can be adjusted independently without the need for connecting pipes, valve groups, etc., between them, resulting in a simple structure and low cost. At the same time, it can be achieved simply by controlling the rotation of the first impeller 330, thereby providing a fast response speed.

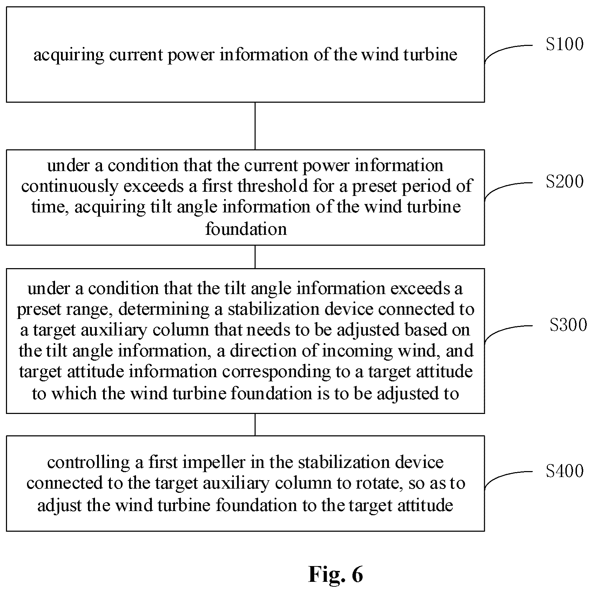

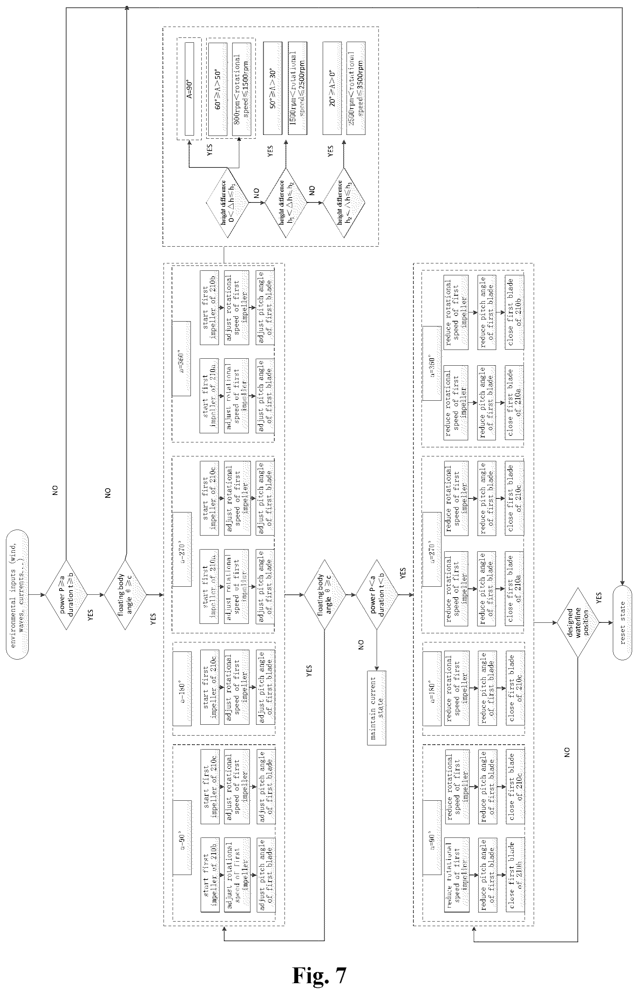

As shown in Fig. 6 and Fig. 7, on the other hand, an embodiment of the present application also provides a control method for the wind turbine as described above, including:

S100: acquiring current power information of the wind turbine;

S200: under a condition that the current power information continuously exceeds a first threshold for a preset period of time, acquiring tilt angle information of the wind turbine foundation 200;

S300: under a condition that the tilt angle information exceeds a preset range, determining a stabilization device 300 connected to a target auxiliary column that needs to be adjusted based on the tilt angle information, a direction of incoming wind, and target attitude information corresponding to a target attitude to which the wind turbine foundation is to be adjusted to;

S400: controlling a first impeller 330 in the stabilization device 300 connected to the target auxiliary column to rotate, so as to adjust the wind turbine foundation 200 to the target attitude.

In step S100, the current power information of the wind turbine can be directly acquired through the main controller of the wind turbine, or can be calculated based on the current rotational speed of the wind turbine.

In step S200, the preset period of time and the first threshold can be set according to the area where the wind turbine is located and the safety level requirements. Exemplarily, the value t of the preset period of time can be b = 20min, and the first threshold m can be 3000kw. Of course, the above are only examples given based on one type of wind turbine and the safety level requirements, and the present application is not limited to the above forms.

In step S300, the attitude of the offshore wind turbine is closely related to the incoming wind and waves. Taking the incoming wind as an example, the different states of the wind rotor are described. Based on the shape of the wind turbine foundation 200 and the state of the wind rotor of the wind turbine, the motion attitude of the wind rotor can be defined into four orientations. Different orientations determine the direction of thrust and are strongly correlated with the attitude of the wind turbine foundation 200. Therefore, the target auxiliary column that needs to be adjusted can be determined based on the direction of the incoming wind and the target attitude information corresponding to a target attitude to which the wind turbine foundation 200 is to be adjusted. The number of target auxiliary columns can be one, two, three, or even more. The target attitude can be a horizontal attitude, or an attitude form at a predetermined angle relative to the horizontal attitude.

Exemplarily, the current state of the floating wind turbine, such as mooring tension, weight, floating body bending moment, and buoyancy center information, can first be obtained through wind turbine information. Based on this input, theoretical calculation can be performed to obtain the information of the target attitude, that is, the corresponding gravity center position and buoyancy center position. The adjustment of the two centers can be achieved through the motion system of a single auxiliary column 210 or multiple auxiliary columns 210, and the input for implementation needs to be combined with the rotor orientation state of the wind rotor.

In step S400, the drive assembly 320 of the stabilization device 300 connected to the target auxiliary column can be controlled to drive the first impeller 330 to rotate, causing the seawater to flow upward or downward in the first direction W within the flow channel, thereby driving the connected auxiliary column 210 to float upward or sink downward in the first direction W, achieving attitude adjustment of the wind turbine foundation 200.

According to the control method provided by the embodiment of the present application, the wind turbine main body 100 is connected to the main column 220. Through the above step settings, by controlling the rotation of the first impeller 330 in the target auxiliary column, the seawater is driven to flow within the flow channel, achieving actions such as floating and sinking of the target auxiliary column, and realizing attitude adjustment of the wind turbine foundation 200, so that the wind turbine can maintain the optimal output attitude when facing external complex and uncertain loads and its own different operating conditions, thereby ensuring the output of the wind turbine.

In some optional embodiments, the control method provided by the embodiment of the present application takes the example in which the wind turbine foundation 200 includes three auxiliary columns 210, namely a first auxiliary column 210a, a second auxiliary column 210b, and a third auxiliary column 210c. The angle between the connecting line of centers of the first auxiliary column 210a and the main column 220 and the reference wind direction Y is 60°. The angle between the connecting line of centers of the second auxiliary column 210b and the main column 220 and the reference wind direction is 300°. The angle between the connecting line of centers of the third auxiliary column 210c and the main column 220 and the reference wind direction is 180°. The tilt angle information includes the tilt angle $\theta$ of the floating body relative to a preset reference plane.

As shown in Fig. 7 to Fig. 11, based on the environmental input, the power of the wind turbine and the power generation duration are first determined. Under a condition that the power of the wind turbine $P \geq a$ (e.g., a=3000kW) and the duration $t \geq b$ (e.g., b=20min) are simultaneously satisfied, the tilt angle $\theta$ ($\theta$ can be $\alpha$ roll, $\beta$ pitch, $\gamma$ yaw) can be measured by a combination of tilt angle sensors. Under a condition that this angle $\theta \geq c$ (e.g., c=5°), the stability adjustment calculation module of the floating wind turbine is activated at this time. The stability adjustment calculation module first obtains the current state of the floating wind turbine through the wind turbine information, such as mooring tension, weight, floating body bending moment, and buoyancy center information; further, based on this input, theoretical calculation can be performed to obtain the information of the target attitude, that is, the corresponding gravity center position and buoyancy center position. The adjustment of the two centers can be achieved through the motion system of a single column or multiple columns, and the input for implementation needs to be combined with the orientation state of the wind rotor.

Exemplarily, the step of determining the stabilization device 300 connected to the target auxiliary column that needs to be adjusted based on the tilt angle information, the direction of incoming wind, and the target attitude information corresponding to the target attitude to which the wind turbine foundation is to be adjusted to can include the following steps.

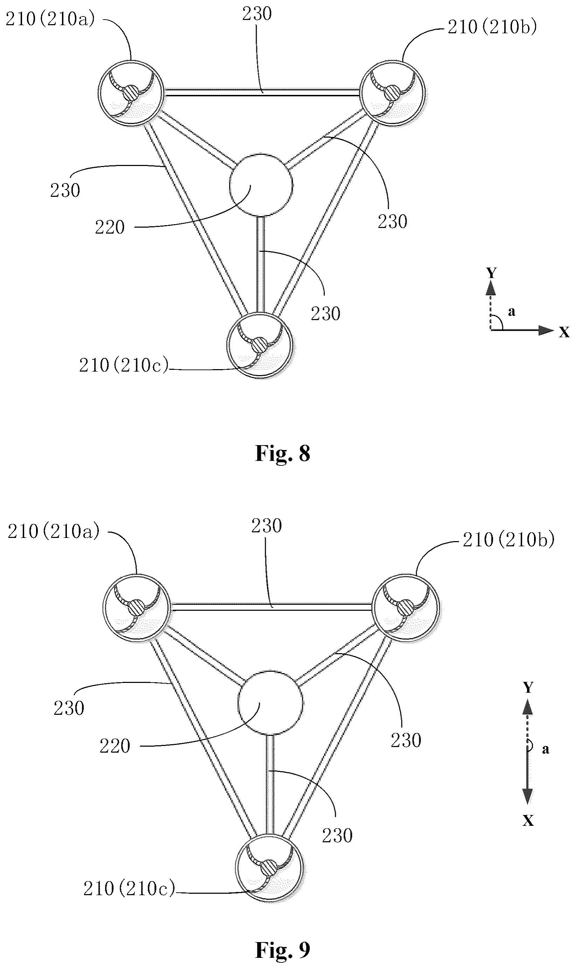

As shown in Fig. 8, under a condition that the tilt angle θ of the wind turbine foundation 200 relative to the preset reference plane is greater than a second threshold c, and the angle a between the incoming wind X and the reference wind direction Y is 90°, it can be completed by the coordinated motion of the stabilization devices 300 connected to the second auxiliary column 210b and the third auxiliary column 210c. At this time, the stabilization devices 300 connected to the second auxiliary column 210b and the third auxiliary column 210c can be activated to control their respective first impellers 330 to rotate forward, causing the second auxiliary column 210b and the third auxiliary column 210c to float upward, so that the tilt angle θ returns to within the preset threshold range.

As shown in Fig. 9, under a condition that the tilt angle of the wind turbine foundation 200 relative to the preset reference plane is greater than the second threshold c, and the angle a between the incoming wind X and the reference wind direction Y is 180°, it can be completed by the motion of the stabilization device 300 connected to the third auxiliary column 210c. At this time, the stabilization device 300 connected to the second auxiliary column 210b can be activated to control its first impeller 330 to rotate forward, causing the third auxiliary column 210c to float upward, so that the tilt angle θ returns to within the preset threshold range.

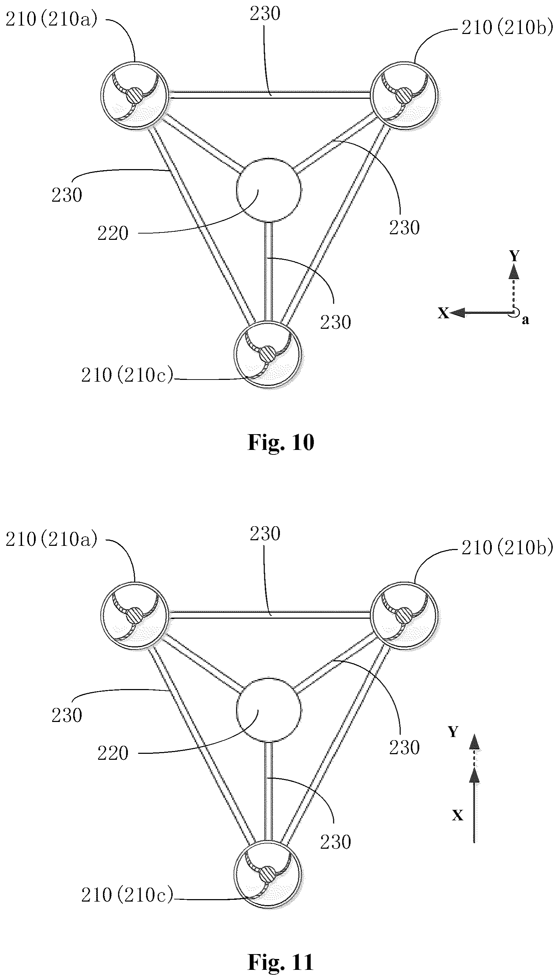

As shown in Fig. 10, under a condition that the tilt angle of the wind turbine foundation 200 relative to the preset reference plane is greater than the second threshold c, and the angle a between the incoming wind X and the reference wind direction Y is 270°, it can be completed by the coordinated motion of the stabilization devices 300 connected to the first auxiliary column 210a and the third auxiliary column 210c. At this time, the stabilization devices 300 connected to the first auxiliary column 210a and the third auxiliary column 210c can be activated to control their respective first impellers 330 to rotate forward, causing the first auxiliary column 210a and the third auxiliary column 210c to float upward, so that the tilt angle θ returns to within the preset threshold range.

As shown in Fig. 11, under a condition that the tilt angle of the wind turbine foundation 200 relative to the preset reference plane is greater than the second threshold c, and the angle a between the incoming wind X and the reference wind direction Y is 360° or 0°, it can be completed by the coordinated motion of the stabilization devices 300 connected to the first auxiliary column 210a and the second auxiliary column 210b. At this time, the stabilization devices 300 connected to the first auxiliary column 210a and the second auxiliary column 210b can be activated to control their respective first impellers 330 to rotate forward, causing the first auxiliary column 210a and the second auxiliary column 210b to float upward, so that the tilt angle θ returns to within the preset threshold range.

Under a condition that the angle a between the incoming wind and the reference wind direction is between the above values, the adjustments of the auxiliary columns 210 corresponding to the two states can be comprehensively considered.

Taking 0° to 90° as an example, the angle a can gradually increase from 0° to 90°. From 0° to the angle before the direction of the incoming wind X and the connecting line of centers of the second auxiliary column 210b and the main column 220 become collinear, the stabilization devices 300 connected to the first auxiliary column 210a and the second auxiliary column 210b can be adjusted. Under a condition that the direction of the incoming wind X and the connecting line of centers of the second auxiliary column 210b and the main column 220 are collinear, the stabilization device 300 connected to the second auxiliary column 210b can be adjusted. From the angle after the direction of the incoming wind X and the connecting line of centers of the second auxiliary column 210b and the main column 220 become collinear to 90°, the stabilization devices 300 connected to the second auxiliary column 210b and the third auxiliary column 210c can be adjusted. The principles for 90° to 180°, 180° to 270°, and 270° to 360° are the same as above, as long as it can ensure the adjustment of the attitude of the wind turbine foundation 200, keep the tilt angle within the preset range, and ensure the power generation efficiency of the wind turbine.

In some optional embodiments, according to the control method provided by the embodiment of the present application, the first impeller 330 includes a first hub 331, a plurality of first blades 332, and a pitch system. The plurality of first blades 332 are spaced apart around the circumference Z of the first hub 331 and are connected to the first hub 331 through the pitch system.

Before step S400, the method further includes:

determining rotation information required for the target auxiliary column according to a height difference between a draft of the target auxiliary column and a set waterline.

The rotation information includes at least one of a rotational speed of the first impeller 330 and an angle between the first blade 332 and the first hub 331.

Optionally, the set waterline can be understood as a pre-set mark on the target auxiliary column, which can be a marked line with an indicator. The draft can be understood as the position line at which the auxiliary column 210 is immersed relative to the set waterline when the wind turbine foundation 200 is tilted.

Step S400 can specifically include:

acquiring the rotation information;
controlling the first impeller 330 in the stabilization device 300 connected to the target auxiliary column to rotate according to the rotation information.

According to the control method provided by the embodiment of the present application, by determining the rotation information required for the target auxiliary column according to the height difference between the draft of the target auxiliary column and the set waterline, and the rotation information being specifically defined as the above information, the rotational speed of the first impeller 330 can be accurately controlled, and the corresponding angle can also be matched between the first blade 332 and the first hub 331, so as to quickly adjust the attitude of the wind turbine foundation 200 and meet the optimal angle requirements of the wind turbine in which the wind turbine foundation 200 is located.

In some optional embodiments, according to the control method provided by the embodiment of the present application, a rotation angle A of the first blade 332 relative to the first hub 331 satisfies $0° < A \leq 90°$, the step of determining the rotation information required for the target auxiliary column according to the height difference between the draft of the target auxiliary column and the set waterline includes:

under a condition that a value range of the height difference H is $0 < H \leq h1$, rotating the first blade 332 relative to the first hub 331 to A = 90°, or under a condition that the value range of the height difference H is $h1 < H \leq h2$, rotating the first blade 332 relative to the first hub 331 to $50° < A \leq 60°$, with a rotational speed of the first impeller 330 being 800rpm-1500rpm;
under a condition that the value range of the height difference H is $h1 < H \leq h2$, rotating the first blade 332 relative to the first hub 331 to $30° < A \leq 50°$, with the rotational speed of the first impeller 330 being 1500rpm-2500rpm;
under a condition that the value range of the height difference H is $h2 < H \leq h3$, rotating the first blade 332 relative to the first hub 331 to $0° < A \leq 20°$, with the rotational speed of the first impeller 330 being 2500rpm-3500rpm.

According to the control method provided by the embodiment of the present application, through the above settings, the angle of the first blade 332 relative to the first hub 331 and the rotational speed of the first impeller 330 can be matched according to different height differences, so as to quickly adjust the attitude of the wind turbine foundation 200 and meet the optimal angle requirements of the wind turbine in which the wind turbine foundation 200 is located.

In some optional embodiments, according to the control method provided by the embodiment of the present application, after the step of adjusting a volume of seawater in the target floating body until the wind turbine foundation 200 reaches the target attitude, the control method further includes:

acquiring the current power information of the wind turbine;
under a condition that the current power information continuously remains below the first threshold for a preset period of time, controlling the first impeller 330 in the stabilization device 300 connected to the target auxiliary column to perform a reverse action, so as to adjust the wind turbine foundation 200 back to an initial state.

The initial state can be understood as the state immediately before the tilt angle information exceeded the preset range.

In some optional embodiments, based on the orientation state of the wind rotor, the rotational speed of the first impeller 330 of the stabilization device 300 connected to the target auxiliary column can first be reduced, then the first blades 332 can be feathered (returned to 90°), and finally the power source can be cut off, stopping the movement of the first blades 332 until the wind turbine foundation enters a reset state.

Exemplarily, under a condition that the angle a between the incoming wind X and the reference wind direction Y is 90°, during the restoration to the initial state, it can be completed by the coordination of the stabilization devices 300 connected to the second auxiliary column 210b and the third auxiliary column 210c. The second auxiliary column 210b and the third auxiliary column 210c can be controlled to sink downward by reversing the first blades 332 of the stabilization devices 300 connected to the second auxiliary column 210b and the third auxiliary column 210c, thereby achieving reset.

Of course, under a condition that the angle a between the incoming wind X and the reference wind direction Y is 90°, during the restoration to the initial state, the rotational speed of the first impellers 330 of the stabilization devices 300 connected to the second auxiliary column 210b and third auxiliary column 210c can also be reduced, then the first blades 332 can be feathered (returned to 90°), and finally the power source can be cut off, stopping the movement of the first blades 332 until the wind turbine enters a reset state.

The operation methods for other orientation states are the same as above and will not be repeated here.

The wind turbine provided by the embodiment of the present application can further include a controller configured to: acquire current power information of the wind turbine; under a condition that the current power information continuously exceeds a first threshold for a preset period of time, acquire tilt angle information of the wind turbine foundation 200; under a condition that the tilt angle information exceeds a preset range, determine a stabilization device 300 connected to a target auxiliary column that needs to be adjusted based on the tilt angle information, a direction of incoming wind, and target attitude information corresponding to a target attitude to which the wind turbine foundation is to be adjusted; control a first impeller 330 in the stabilization device 300 connected to the target auxiliary column to rotate, so as to adjust the wind turbine foundation 200 to the target attitude.

Optionally, the controller can be configured to execute the steps corresponding to the control method provided in the various embodiments described above, which will not be repeated here.

The wind turbine provided by the embodiment of the present application can have a controller that is a separately set control cabinet, or of course, integrated into the main controller of the wind turbine.

The wind turbine provided by the embodiment of the present application, by providing a controller, can be used to execute the control method provided in the various embodiments described above, facilitating the control of the wind turbine foundation 200, enabling it to control and adjust the corresponding stabilization devices according to the incoming wind, the current attitude, and the target attitude, thereby ensuring the overall power generation efficiency of the wind turbine.

Although the present application has been described with reference to preferred embodiments, various improvements can be made and components can be replaced with equivalents without departing from the scope of the present application. In particular, as long as there is no structural conflict, the various technical features mentioned in the various embodiments can be combined in any manner. The present application is not limited to the specific embodiments disclosed herein but includes all technical solutions falling within the scope of the claims.

**Claims**

1.    A wind turbine foundation disposed in seawater and used to support a tower, wherein the wind turbine foundation comprises:

     a floating body comprising a main column, a plurality of auxiliary columns, and connecting bodies, the plurality of auxiliary columns being spaced apart around a circumference of the main column and connected to the main column respectively via the connecting bodies, the main column being used for connecting to the tower, each of the auxiliary columns having a bottom wall capable of being arranged facing the seawater along a first direction; stabilization devices, the bottom wall of each of the auxiliary columns being provided with a respective one of the stabilization devices, the stabilization device comprising a drive assembly, a first impeller, and a base connected to the auxiliary column, the base having an inner cavity, and a first opening and a second opening communicating with the inner cavity, the first opening and the second opening having a height difference in the first direction, the first opening, the inner cavity, and the second opening forming a flow channel for the seawater, the first impeller being disposed in the inner cavity, the drive assembly driving the first impeller to rotate and causing the seawater to flow within the flow channel, so as to adjust a tilt angle between the floating body as a whole and a reference plane.

2.    The wind turbine foundation according to claim 1, wherein the base as a whole is cylindrical, the base has an end wall disposed opposite to the bottom wall in the first direction and a side wall disposed surrounding the end wall, the end wall and the side wall enclose and form the inner cavity, the bottom wall closes the inner cavity, the first opening is disposed on the end wall, and the second opening is disposed on the bottom wall.

3.    The wind turbine foundation according to claim 2, wherein along the first direction, a radial dimension of the side wall first decreases and then increases.

4.    The wind turbine foundation according to claim 1, wherein the drive assembly comprises a drive motor, a gearbox, and a drive shaft, the drive shaft extends along the first direction, an input end of the gearbox is connected to the drive motor and an output end of the gearbox is connected to the drive shaft, and the first impeller is connected to the drive shaft.

5.    The wind turbine foundation according to claim 4, wherein the auxiliary column has a hollow cavity, the drive motor and the gearbox are located within the hollow cavity, the drive shaft is inserted through the bottom wall and connected to the output end of the gearbox, and the drive shaft is in dynamic sealing cooperation with the bottom wall.

6.    The wind turbine foundation according to claim 1, wherein the drive assembly comprises a direct drive motor and a drive shaft, the drive shaft extends along the first direction, the first impeller is connected to the drive shaft, the direct drive motor is connected to one of the bottom wall and the base and comprises a rotor and a stator that rotate in cooperation, and the drive shaft is coaxially disposed with the direct drive motor and connected to the rotor.

7. The wind turbine foundation according to claim 1, wherein the first impeller comprises a first hub, a plurality of first blades, and a pitch system, the first hub is connected to the drive assembly, the plurality of first blades are spaced apart around a circumference of the first hub and connected to the first hub through the pitch system, so as to adjust a pitch angle of the first blades.

8. The wind turbine foundation according to claim 1, wherein the stabilization device further comprises a flow straightening member disposed in the inner cavity and connected to the base, the flow straightening member is disposed between the first opening and the first impeller, so as to straighten a flow direction of the seawater entering from the first opening.

9. The wind turbine foundation according to claim 8, wherein the flow straightening member comprises a second hub and a plurality of second blades, the plurality of second blades are spaced apart around a circumference of the second hub and connected to the second hub, an end of the second blade away from the second hub is connected to the base, and a flow straightening hole is formed between adjacent two of the second blades.

10. The wind turbine foundation according to claim 1, wherein connecting lines between centers of the plurality of auxiliary columns form a regular polygon, a center of the main column coincides with a center of the regular polygon, and in a circumference of the main column, adjacent two of the auxiliary columns are connected by the connecting body.

11. A wind turbine, comprising:

   the wind turbine foundation according to any of claims 1 to 10;
   a wind turbine main body disposed on the main column, the wind turbine main body comprising a tower connected to the main column, a nacelle disposed on the tower, and a wind rotor disposed on the nacelle.

12. The wind turbine according to claim 11, further comprising a controller configured to:
   acquire current power information of the wind turbine; under a condition that the current power information continuously exceeds a first threshold for a preset period of time, acquire tilt angle information of the wind turbine foundation; under a condition that the tilt angle information exceeds a preset range, determine a stabilization device connected to a target auxiliary column that needs to be adjusted based on the tilt angle information, a direction of incoming wind, and target attitude information corresponding to a target attitude to which the wind turbine foundation is to be adjusted; control a first impeller in the stabilization device connected to the target auxiliary column to rotate, so as to adjust the wind turbine foundation to the target attitude.

13. A control method for the wind turbine according to claim 11, comprising:

   acquiring current power information of the wind turbine;
   under a condition that the current power information continuously exceeds a first threshold for a preset period of time, acquiring tilt angle information of the wind turbine foundation;
   under a condition that the tilt angle information exceeds a preset range, determining a stabilization device connected to a target auxiliary column that needs to be adjusted based on the tilt angle information, a direction of incoming wind, and target attitude information corresponding to a target attitude to which the wind turbine foundation is to be adjusted to;
   controlling a first impeller in the stabilization device connected to the target auxiliary column to rotate, so as to adjust the wind turbine foundation to the target attitude.

14. The control method according to claim 13, wherein the first impeller comprises a first hub, a plurality of first blades, and a pitch system, the plurality of first blades are spaced apart around a circumference of the first hub and connected to the first hub through the pitch system;
   **before** the step of controlling the first impeller in the stabilization device connected to the target auxiliary column to rotate, so as to adjust the wind turbine foundation to the target attitude, the method further comprises:

   determining rotation information required for the target auxiliary column according to a height difference between a draft of the target auxiliary column and a set waterline;
   the rotation information comprises at least one of a rotational speed of the first impeller and an angle between the first blade and the first hub;

the step of controlling the first impeller in the stabilization device connected to the target auxiliary column to rotate comprises:

acquiring the rotation information;
controlling the first impeller in the stabilization device connected to the target auxiliary column to rotate according to the rotation information.

15. The control method according to claim 14, wherein a rotation angle A of the first blade relative to the first hub satisfies $0° < A \leq 90°$, the step of determining the rotation information required for the target auxiliary column according to the height difference between the draft of the target auxiliary column and the set waterline comprises:

under a condition that a value range of the height difference H is $0 < H \leq h1$, rotating the first blade relative to the first hub to A = 90°, or rotating the first blade relative to the first hub to $50° < A \leq 60°$, with the rotational speed of the first impeller being 800rpm-1500rpm;
under a condition that the value range of the height difference H is $h1 < H \leq h2$, rotating the first blade relative to the first hub to $30° < A \leq 50°$, with the rotational speed of the first impeller being 1500rpm-2500rpm;
under a condition that the value range of the height difference H is $h2 < H \leq h3$, rotating the first blade relative to the first hub to $0° < A \leq 20°$, with the rotational speed of the first impeller being 2500rpm-3500rpm.

16. The control method according to claim 14, wherein after the step of adjusting a volume of seawater in the target floating body until the wind turbine foundation reaches the target attitude, the control method further comprises:

acquiring the current power information of the wind turbine;
under a condition that the current power information continuously remains below the first threshold for a preset period of time, controlling the first impeller in the stabilization device connected to the target auxiliary column to perform a reverse action, so as to adjust the wind turbine foundation back to an initial state;
or,
acquiring the current power information of the wind turbine;
under a condition that the current power information continuously remains below the first threshold for a preset period of time, reducing the rotational speed of the first impeller in the stabilization device connected to the target auxiliary column;
feathering the first impeller in the target floating body and stopping the rotation of the first impeller, so as to adjust the wind turbine foundation back to the initial state.

**Fig. 1**

**Fig. 2**

**Fig. 3**

**Fig. 4**

**Fig. 5**

acquiring current power information of the wind turbine — S100

under a condition that the current power information continuously exceeds a first threshold for a preset period of time, acquiring tilt angle information of the wind turbine foundation — S200

under a condition that the tilt angle information exceeds a preset range, determining a stabilization device connected to a target auxiliary column that needs to be adjusted based on the tilt angle information, a direction of incoming wind, and target attitude information corresponding to a target attitude to which the wind turbine foundation is to be adjusted to — S300

controlling a first impeller in the stabilization device connected to the target auxiliary column to rotate, so as to adjust the wind turbine foundation to the target attitude — S400

**Fig. 6**

Fig. 7

environmental inputs (wind, waves, currents...)

power P≥a duration t≥b — NO

YES

floating body angle θ≥c — NO

YES

a=90°
- start first impeller of 210b → adjust rotational speed of first impeller → adjust pitch angle of first blade
- start first impeller of 210c → adjust rotational speed of first impeller → adjust pitch angle of first blade

a=180°
- start first impeller of 210c → adjust rotational speed of first impeller → adjust pitch angle of first blade

a=270°
- start first impeller of 210a → adjust rotational speed of first impeller → adjust pitch angle of first blade
- start first impeller of 210c → adjust rotational speed of first impeller → adjust pitch angle of first blade

a=360°
- start first impeller of 210a → adjust rotational speed of first impeller → adjust pitch angle of first blade
- start first impeller of 210b → adjust rotational speed of first impeller → adjust pitch angle of first blade

height difference 0<△h≤h₁ — YES
- A=90°
- 60°≥A>50°
- 800rpm<rotational speed≤1500rpm

NO

height difference h₁<△h≤h₂ — YES
- 50°≥A>30°
- 1500rpm<rotational speed≤2500rpm

NO

height difference h₂<△h≤h₃ — YES
- 20°≥A>0°
- 2500rpm<rotational speed≤3500rpm

floating body angle θ≥c — YES

power P<a duration t<b — NO → maintain current state

YES

a=90°
- reduce rotational speed of first impeller → reduce pitch angle of first blade → close first blade of 210b
- reduce rotational speed of first impeller → reduce pitch angle of first blade → close first blade of 210c

a=180°
- reduce rotational speed of first impeller → reduce pitch angle of first blade → close first blade of 210c

a=270°
- reduce rotational speed of first impeller → reduce pitch angle of first blade → close first blade of 210a
- reduce rotational speed of first impeller → reduce pitch angle of first blade → close first blade of 210c

a=360°
- reduce rotational speed of first impeller → reduce pitch angle of first blade → close first blade of 210a
- reduce rotational speed of first impeller → reduce pitch angle of first blade → close first blade of 210b

designed waterline position — NO

YES

reset state

**Fig. 8**

**Fig. 9**

**Fig. 10**

**Fig. 11**

# EP 4 737 711 A1

## INTERNATIONAL SEARCH REPORT

| International application No. |
|---|
| **PCT/CN2023/135895** |

| A. | CLASSIFICATION OF SUBJECT MATTER |
|---|---|

F03D13/20(2016.01)i; F03D13/25(2016.01)i; E02D27/42(2006.01)i

According to International Patent Classification (IPC) or to both national classification and IPC

| B. | FIELDS SEARCHED |
|---|---|

Minimum documentation searched (classification system followed by classification symbols)

IPC:F03D E02D

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 漂浮, 浮体, 立柱, 叶轮, 电机, 驱动, 海水, 倾斜, 倾覆, float, motor, impeller, inclination

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116928031 A (GOLDWIND SCIENCE & TECHNOLOGY CO., LTD. et al.) 24 October 2023 (2023-10-24)<br>claims 1-16 | 1-16 |
| A | CN 115355140 A (ZHEJIANG GOLDWIND SCIENCE & TECHNOLOGY CO., LTD.) 18 November 2022 (2022-11-18)<br>description, paragraphs 51-128, and figures 1-7 | 1-16 |
| A | CN 111622903 A (WANG SHANG) 04 September 2020 (2020-09-04)<br>entire document | 1-16 |
| A | CN 111637021 A (SOUTHERN UNIVERSITY OF SCIENCE AND TECHNOLOGY et al.) 08 September 2020 (2020-09-08)<br>entire document | 1-16 |
| A | CN 113212678 A (POWERCHINA HUADONG ENGINEERING CORP., LTD.) 06 August 2021 (2021-08-06)<br>entire document | 1-16 |
| A | JP 2018203195 A (MITSUI E & S ZOSEN CO., LTD.) 27 December 2018 (2018-12-27)<br>entire document | 1-16 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 March 2024** | **28 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135895**

| C. | DOCUMENTS CONSIDERED TO BE RELEVANT | |
|---|---|---|
| Category* | Citation of document, with indication, where appropriate, of the relevant passages | Relevant to claim No. |
| A | KR 101044753 B1 (DAEWOO ENGINEERING & CONSTRUCTION CO., LTD.) 27 June 2011 (2011-06-27)<br>entire document | 1-16 |
| A | US 2005206168 A1 (MURAKAMI MITSUNORI et al.) 22 September 2005 (2005-09-22)<br>entire document | 1-16 |
| A | WO 2013160579 A1 (IFP ENERGIES NOUVELLES) 31 October 2013 (2013-10-31)<br>entire document | 1-16 |

Form PCT/ISA/210 (second sheet) (July 2022)

## INTERNATIONAL SEARCH REPORT
### Information on patent family members

International application No.

**PCT/CN2023/135895**

| Patent document cited in search report | | | Publication date (day/month/year) | Patent family member(s) | | | Publication date (day/month/year) |
|---|---|---|---|---|---|---|---|
| CN | 116928031 | A | 24 October 2023 | None | | | |
| CN | 115355140 | A | 18 November 2022 | None | | | |
| CN | 111622903 | A | 04 September 2020 | None | | | |
| CN | 111637021 | A | 08 September 2020 | None | | | |
| CN | 113212678 | A | 06 August 2021 | None | | | |
| JP | 2018203195 | A | 27 December 2018 | None | | | |
| KR | 101044753 | B1 | 27 June 2011 | None | | | |
| US | 2005206168 | A1 | 22 September 2005 | WO | 03072428 | A1 | 04 September 2003 |
| | | | | JP | 2003252288 | A | 10 September 2003 |
| WO | 2013160579 | A1 | 31 October 2013 | ES | 2579703 | T3 | 16 August 2016 |
| | | | | PT | 2841769 | E | 17 June 2016 |
| | | | | US | 2015071779 | A1 | 12 March 2015 |
| | | | | US | 9739267 | B2 | 22 August 2017 |
| | | | | JP | 2015515578 | A | 28 May 2015 |
| | | | | JP | 6155326 | B2 | 28 June 2017 |
| | | | | FR | 2990005 | A1 | 01 November 2013 |
| | | | | FR | 2990005 | B1 | 17 July 2015 |
| | | | | EP | 2841769 | A1 | 04 March 2015 |
| | | | | EP | 2841769 | B1 | 30 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310818717